# EUROPEAN PATENT SPECIFICATION

(11) **EP 1 527 647 B1**
(45) Date of publication and mention of the grant of the patent: **15.10.2008**
(21) Application number: 03732418.3
(22) Date of filing: 19.05.2003
(51) Int. Cl.: H04Q 7/36, H04B 7/26

(54) **A COMMUNICATION SYSTEM AND METHOD OF ALLOCATING RESOURCE THEREFORE**
EIN KOMMUNIKATIONSSYSTEM UND EIN ZUGEHÖRIGES VERFAHREN ZUR RESSOURCENZUWEISUNG
SYSTEME DE COMMUNICATIONS ET SON PROCEDE D'AFFECTATION DE RESSOURCES

(30) Priority: 24.07.2002 GB 0217086
(43) Date of publication of application: 04.05.2005
(73) Proprietor: MOTOROLA, INC., Schaumburg, IL 60196 (US)
(72) Inventor: THOMAS, Howard, Cirencester, Gloucestershire GL7 1EJ (GB); MESSER, Victoria Kate, Melksham, Wiltshire SN12 64Y (GB)
(74) Representative: Jepsen, René Pihl
(86) International application number: PCT/EP2003/005267
(87) International publication number: WO 2004/016022

(56) References cited:
- EP-A- 1 063 791
- WO-A-99/60809
- US-B1- 6 359 874
- SHOJI T ET AL: "Dedicated priority function SEG for TD-CDMA cellular system" IEEE, vol. 4, 24 September 2000 (2000-09-24), pages 1784-1788, XP010524336

## Description

### Field of the Invention

This invention relates to a communication system and a method of allocating resource therefor, and in particular to a Time Division Duplex cellular communication system and method of allocating resource therefor.

### Background of the Invention

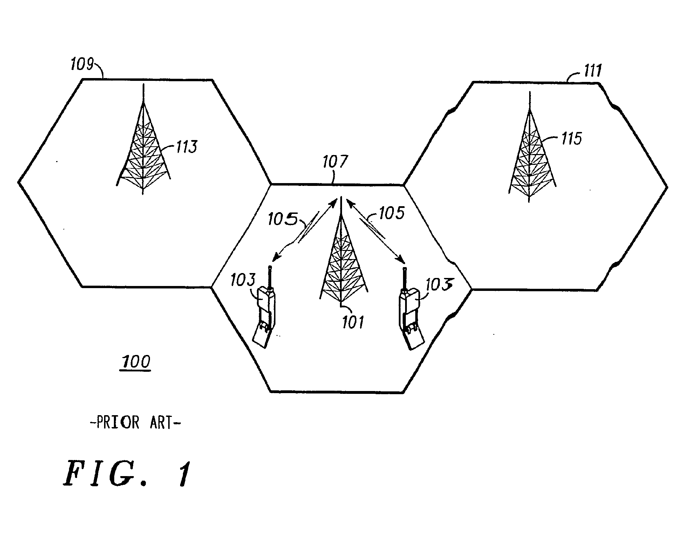

In a cellular communication system, each of the subscriber units (typically mobile stations, communication terminals, wireless devices, user equipment, remote terminals etc) communicates with a fixed base station. Communication from the subscriber unit to the base station is known as uplink, and communication from the base station to the subscriber unit is known as downlink. The total coverage area of the system is divided into a number of separate areas or cells, each predominantly covered by a single base station. The cells are typically geographically distinct with an overlapping coverage area with neighbouring cells. FIG. 1 illustrates a cellular communication system 100. In the system, a base station 101 communicates with a number of subscriber units 103 over radio channels 105. In the cellular system, the base station 101 covers users within a certain geographical area 107, whereas other geographical areas 109, 111 are covered by other base stations 113, 115. Some overlap areas 117 can be covered by more than one cell.

As a subscriber unit moves from the coverage area of one cell to the coverage area of another cell, the communication link will change from being between the subscriber unit and the base station of the first cell, to being between the subscriber unit and the base station of the second cell. This is known as a handover. Specifically, some cells may lie completely within the coverage of other larger cells.

All base stations are interconnected by a fixed network. This fixed network comprises communication lines, switches, interfaces to other communication networks and various controllers required for operating the network. A call from a subscriber unit is routed through the fixed network to the destination specific for this call. If the call is between two subscriber units of the same communication system, the call will be routed through the fixed network to the base station of the cell in which the other subscriber unit currently is. A connection is thus established between the two serving cells through the fixed network. Alternatively, if the call is between a subscriber unit and a telephone connected to the Public Switched Telephone Network (PSTN) the call is routed from the serving base station to the interface between the cellular mobile communication system and the PSTN. It is then routed from the interface to the telephone by the PSTN. A similar procedure is used for other public or private networks.

A cellular mobile communication system is allocated a frequency spectrum for the radio communication between the subscriber units and the base stations. This spectrum must be shared between all subscriber units simultaneously using the system.

One method of sharing this spectrum is by a technique known as Time Division Multiple Access (TDMA). In a TDMA communication system, the frequency spectrum is typically divided into a number of separate frequency channels or carriers and for each of these carriers a plurality of subscriber units are served by being allocated distinct time intervals. Thus in the example of the TDMA communication system GSM, the frequency spectrum is divided into 200 kHz frequency channels each of which is divided into eight separate time slots. A subscriber unit is allocated a specific time slot on a given frequency channel for communication with the serving base station. Further details of GSM can be found in 'The GSM System for Mobile Communications', Bay Foreign Language Books, authors Michel Mouly and Marie-Bernadette Pautet, 1992, ISBN 2950719007,

Another method of sharing cellular spectrum is by a technique known as Code Division Multiple Access (CDMA). In a Direct Sequence CDMA (DS-CDMA) communication system, the signals are multiplied by a high rate code whereby the signal is spread over a larger frequency spectrum. A narrowband signal is thus spread and transmitted as a wideband signal. At the receiver, the original narrowband signal is regenerated by multiplication of the received signal with the same code used to spread the signal in the transmitter. A signal which has been spread by use of a different code will not be de-spread by the receiver but will remain a wide band signal. It will then be removed by filtering after the de-spreading operation. In the receiver, the majority of interference from signals in the same frequency spectrum as the wanted signal can thus be removed by filtering, Consequently, a plurality of subscriber units can be accommodated in the same wideband spectrum by allocating different codes for different subscriber units. Codes are chosen to minimise the interference caused between subscriber units typically by choosing orthogonal codes when possible. A further description of CDMA communication systems can be found in 'Spread Spectrum CDMA Systems for Wireless Communications', Glisic & Vucetic, Artech house Publishers, 1997, ISBN 0-89006-858-5. Examples of CDMA cellular communication systems are IS 95 and the Universal Mobile Telecommunication System (UMTS).

Another multiple access scheme used in UMTS is Time Division Duplex (TDD). Further details of UMTS TDD can be found in the 3GPP Technical Specifications TS 25.102 UTRA (UE) TDD Radio Transmission and Reception and TS 25.105 UTRA (BS) TDD Radio Transmission and Reception. In this scheme, the same frequency is used for uplink and downlink communication by allocating different time intervals for uplink and downlink. In UMTS TDD, the frequency channel is divided into time slots which can be individually allocated for uplink or downlink. Each subscriber unit is typically allocated one timeslot for uplink and one timeslot for downlink. More than one subscriber unit may be allocated within one timeslot and each subscriber unit is therefore allocated a specific short user specific code that enables the signals for each of the subscriber units within a timeslot to be differentiated. In UMTS TDD the separation of the signals for the individual subscriber units is done by in each receiver performing joint detection of the signals for all subscriber units in a given timeslot of a given cell. Subscriber units of different cells are separated by the use of a long cell specific (separation) spreading code. Further details on UMTS TDD and joint detection can be found in "Zero Forcing An Minimum Mean-Square Error Equalisation For Multi-User Detection In Code-Division Multiple Access Channels" by Klein, Kavas Kaleh and Bajer, IEEE Transactions on Vehicular Technology, 45, pp 276-287, May 1996.

Examples of cellular communication systems are is disclosed in EP 1063791 A2 which describes a base station changing a spreading code of a unit within its cell to minimize interference and US6359874 which discloses sharing of codes to geographic areas between cells without regard to whether interference is contained in that area

The advantageous effect of performing joint detection of all subscriber units in a single cell is that, it is possible to significantly reduce and in some cases virtually eliminate all intra-cell interference. However, inter-cell interference is not reduced as joint detection only extends to cells within a single cell, whereas subscriber units of different cells are separated by use of long cell specific spreading codes. Therefore, inter-cell interference will be a limiting factor, which requires that subscriber units are allocated such that inter cell interference is sufficiently low for reliable communication to be possible. As a consequence, subscriber units cannot be freely allocated in a cell without consideration of the conditions of other cells. For example, a user at the edge of the cell transmitting at high power may result in the time slot being unusable in a neighbour cell due to the high inter cell interference caused. Therefore, a dynamic channel algorithm is typically applied over a plurality of neighbouring cells. Typically a dynamic channel allocation will operate such that time slots are partitioned between cells to avoid interference.

However, this provides for a very complicated and wasteful resource allocation, as time slots cannot be effectively reused due to the high level of inter cell interference, and the resource allocation in a plurality of cells must be considered simultaneously. An improved system for resource allocation is thus desired.

### Summary of the Invention

The invention seeks to provide an improved system for resource allocation.

Accordingly there is provided a cellular communication system in accordance with claim 1.

Thus the invention provides a system for resource allocation wherein subscriber units in a detrimental interference relationship are allocated resource from a resource shared between cells, thereby providing the advantage of allowing for mutual optimisation of subscriber units experiencing inter-cell interference across a plurality of cells.

Preferably the shared resource is divided according to a code division multiple access scheme, and the means for allocating resource of the shared resource is operable to allocate different user specific codes to different subscriber units of the first group of subscriber units.

According to one feature of the invention, at least one of the subscriber units of the first group of subscriber units is operable to perform joint detection of signals for a plurality of the subscriber units of the first group of subscriber units thereby reducing interference caused by transmissions to other subscriber units is reduced.

According to a second feature of the invention, a time division multiple access scheme is employed by the cells of the communication system with each time slot being shared by a plurality of subscriber units having different user specific codes.

According to a third feature of the invention, the shared resource is shared according to a time division multiple access scheme and the means for allocating resource of the shared resource is operable to allocate different time slots to different subscriber units of the first group of subscriber units.

According to a fourth feature of the invention, cellular communication system further comprises means for determining the identity of subscriber units belonging to the first group of subscriber units by other subscriber units of the first group detecting characteristics of interfering subscriber units.

According to a second aspect of the invention, there is provided a method of allocating resource in accordance with claim 8.

### Brief Description of the Drawings

An embodiment of the present invention is described below, by way of example only, with reference to the Drawings, in which:
FIG. 1 is an illustration of a cellular communication system according to prior art; and
FIG. 2 is an illustration of a cellular communication system in accordance with an embodiment of the invention.

### Detailed Description of a Preferred Embodiment

The description of the preferred embodiment will focus on the implementation for a UMTS TDD cellular communication system but it will be apparent that the invention is not limited to this specific embodiment but can be used in many different communication systems including TDMA and CDMA communication systems.

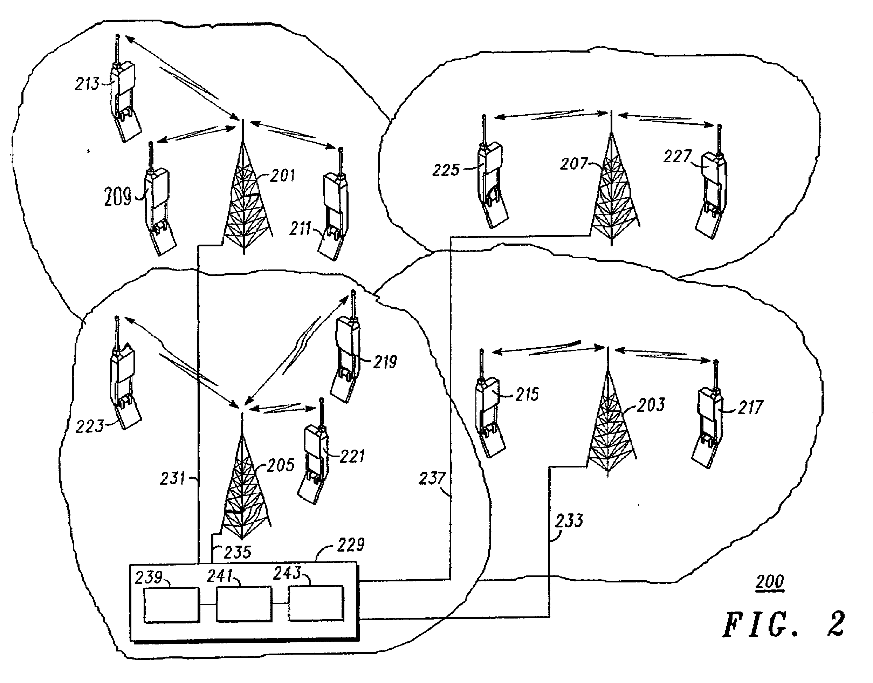

FIG. 2 is an illustration of a cellular communication system in accordance with an embodiment of the invention.

In FIG. 2 four base stations 201, 203, 205, 207 are shown, each of which supports subscriber units in a single cell. Each of the base stations 201, 203, 205, 207 has an associated cell separation spreading code which is used for separating between the subscriber units of the different cells as well known in the art.

In the shown scenario, the first base station 201 serves three subscriber units 209, 211, 213, the second base station 203 serves two subscriber units 215, 217, the third base station 205 serves three subscriber units 219, 221, 223 and the fourth base station 207 serves two subscriber units 225, 227.

In a conventional TDD system, the subscriber units of one cell interfere with each other and with the subscriber units of the other cells. The intra-cell interference is mitigated by use of joint detection in both the uplink and downlink direction, whereas the inter-cell interference is only mitigated through the use of cell separation spreading codes. As a consequence the inter-cell interference is highly dependent on the specific conditions and as such on the current radio propagation characteristics, the location of the subscriber units, the transmit power etc. In the shown scenario of FIG. 2, subscriber units 209, 213, 217, 221, 223, 225 and 227 are all operating in conditions, where the inter cell interference conditions are acceptable and do not prevent reliable communication, even if the subscriber units are allocated in the same time slot. In other words, the cell separation spreading code is sufficient to separate the signal to or from a desired subscriber unit over those allocated in the same time slot in a different cell. However, some subscriber units 211, 215, 219 are served by different base stations 201, 203, 205 respectively, but are situated so relatively close that the prevailing radio propagations results in the inter-cell interference level being so high that it prevents acceptable communication. In other words, the cell separation code is insufficient for separating signals from a desired subscriber 211 units from those of the two other subscriber units 215, 219. As such, a detrimental interference relationship exists between the subscriber units 211, 215, 219 which is unacceptable and/or undesirable. In the scenario shown the detrimental interference relationship prevents reliable communication from the involved subscriber units 211, 215, 219. In other scenarios, communication may be possible but the detrimental interference relationship is such that this communication is undesirable for example by being too resource demanding, requiring undesirably high transmit powers, being too unreliable or requiring too much complexity in the receiver processing.

In the preferred embodiment of FIG. 2, the base stations 201, 203, 205, 207 are connected to a central processing unit 229 through communication lines 231, 233, 235, 237. The central processing unit 229 comprises an interference processor 239 for identifying that a detrimental interference relationship exists between a first group of subscriber units, 211, 215, 219 in the scenario of FIG. 2, each served by one of a plurality of base stations, 201, 203, 205 in the scenario of FIG. 2.

In the preferred embodiment, the detrimental interference relationship is simply determined by determining the position of the subscriber units according to any known method of location determination, and deeming that a detrimental interference relationship exists, if the distance between subscriber units of different cells is less than a given amount. In this embodiment no consideration is made of the actual specific operating conditions such as the actual interference level, transmit powers, propagation characteristics etc. Consequently, the preferred method of determining that a detrimental relationship exists may in some circumstances not provide accurate and reliable estimates but has the significant advantage of being very simple to implement and not require measurements of current characteristics and conditions.

Further, if location determination is made by the base station, no measurements need be made and reported by the subscriber units.

In more complex implementations, the identification of the existence of a detrimental interference relationship can be made in response to measurements of the actual radio conditions in which the subscriber units operate. In one such embodiment, each subscriber unit measures the received interference level and reports this to the base station, which forwards it to the interference processor together with location data and transmission data (including time slot information) for the specific subscriber unit. The interference processor thus receives interference, transmission data and location data for all subscriber units in a given region comprising a plurality of cells. All subscriber units having an interference level above a predetermined level are then individually considered. For each of these subscriber units, the interfering subscriber unit is determined as the closest subscriber unit which operates in a different cell and on the same time slot or alternatively if a plurality of subscriber units are roughly at the same distance from the interfered subscriber unit they will all be considered interfering subscriber units. The interference level of each interfering subscriber unit will then be considered and if any interference levels are above the thresholds the interfering subscriber units are determined using the same mechanism. This process is iterated until the interference levels of all newly defined interfering subscriber units are below the threshold, all newly defined interfering subscriber units already belong to the group of interfering subscriber units or until the group reaches a predetermined size. The first group of subscriber units is then identified as those subscriber units being interfering subscriber units. The interference processor may optionally continue to define further pluralities of subscriber units being in detrimental interference relationships by considering an interfered subscriber unit which is not part of the first group and repeating the described process.

In a different embodiment, the subscriber units take a more active role and actively decode the interfering signals to determine the spreading code, user specific (e.g. scrambling) code and other information of the interfered signal.

This information is reported to the base stations which forward it to the interference processor. This uses the information to determine the interfering subscriber unit which increased reliability. In the extreme case, the subscriber unit simply reports the identity of any interfering subscriber units.

The interference processor 239 is connected to a code allocator 241 operable to allocate a common spreading code to the first group of subscriber units 211, 215, 219 thereby creating a shared resource for the first group of subscriber units 211, 215, 219 and plurality of base stations 201, 203, 205.

Generally a cell separation spreading code is allocated semi-permanently to each cell. Thus the four cells formed by the base stations 201, 203, 205 and 207 each have different spreading codes. Each subscriber unit thus use a spreading code dependent on which base station is the serving base station. The spreading code of a given cell may be unique but can in some communication systems also be re-used by a cell sufficiently distant for the cells not to interfere with each other. However, in addition and in accordance with the preferred embodiment of the invention, the cells can also be allocated a second spreading code which is used for the communication with the subscriber units belonging to the first group of subscriber units, i.e. the second spreading code is used for communication with a group of subscriber units being in a detrimental interference relationship. This second spreading code is common for the plurality of base stations serving the subscriber units in the first group. Thus a shared resource is created by the use of a second spreading code.

In the preferred embodiment, the shared resource is made by using one of the cell separation spreading codes of one of the base stations in the other cells having subscriber units belonging to the first group. In this embodiment, the second spreading code is only used in some time slots, whereas for the majority of time slots, only the cell separation spreading codes of the relevant base station is available to subscriber units. In alternative embodiments, the second spreading code is a separate spreading code not allocated to any of the base station, In both embodiments, the code allocator 241 determines which spreading code is allocated to the first group of subscriber units in a detrimental interference relationship to form the shared resource.

The code allocator 241 is connected to a resource allocator 243 for allocating resource of the shared resource between the subscriber units of the first group of subscriber units 211, 215, 219 and for allocating resource of the cell separation spreading code of each of the base stations of the group of base stations to subscriber units 209, 213, 217, 221, 223, 225, 227 not of the first group of subscriber units 211, 215, 219. Hence in the preferred embodiment, time slots and user specific codes of the second shared spreading code is allocated to each of the subscriber units 211, 215, 219 which are in a detrimental interference relationship whereas time slots and user specific codes of the cell separation spreading codes are allocated to the other subscriber units depending on which base station is the serving base station. Hence, for subscriber unit 209, a time slot and user specific code of the spreading code of base station 201 is allocated, for subscriber unit 217, the cell separation spreading code of base station 203 is used, for subscriber unit 225, the cell separation spreading code of base station 207 is used and so on. In the preferred embodiment, where one of the cell separation codes is also used as the spreading code of the shared resource, the subscriber units of the first group are allocated in the time slots, wherein the spreading code is used for the shared resource and the remaining subscriber units of that cell are allocated in time slots in which the spreading code is used only for the specific cell.

Once the resource allocation has been performed in the resource allocator 243, it is communicated to the appropriate base stations. The base stations subsequently communicate the resource allocation to the subscriber unit units, which will then initiate or continue communication using the allocated resource. Specifically, a subscriber unit may be moved from a resource allocation on a cell separation spreading code to a resource on a shared spreading code by use of existing handover commands. In the preferred embodiment of a UMTS TDD communication system, the standardised handover commands can be used to instruct the subscriber unit to handover to a given spreading code, a specific time slot and a specific code. These commands are equally applicable to a handover to a different spreading code of the same cell as they are to a handover to a different cell. In other words, the shared spreading code will for the subscriber unit be equivalent to a neighbour cell.

Thus by using a shared resource for subscriber units in a detrimental interference relationship, a simple and effective resource allocation is possible for subscriber units having significant inter-cell interference, while at the same time conventional resource allocation can be used for all remaining subscriber units. Thus efficient yet simple resource allocation is possible allowing inter-cell and intra-cell resource allocation to be individually optimised.

In the preferred embodiment, all subscriber units, using the shared resource, use the same spreading code and are in the same time slot. Thus the de-spreading performed in a receiver of the base stations or subscriber units, will de-spread all signals associated with the shared resource. Consequently, following the de-spreading, the signals will only be separated by the short user specific code similarly to the situation for subscriber units served by the same cell in the same time slot. Thus the receiver can perform joint detection on the de-spread signal thereby effectively reducing the interference caused by the communication with other subscriber units of the first group. In this way, it is thus possible to perform joint detection of signals served by different cells using a standard TDD subscriber unit. Thus, in the preferred embodiment, the use of a shared resource together with joint detection virtually removes the inter-cell interference for subscriber units being in a detrimental interference relationship, thereby improving the quality of the communication and increasing the capacity of the communication system.

In a different embodiment, the shared resource is not divided by use of user specific codes but according to a Time Division Multiple Access (TDMA) scheme. In this embodiment, the subscriber units of the first group are allocated different time slots using the shared spreading code.

It will be apparent to the person skilled in the art that the invention is equally applicable to uplink and downlink communication.

The components and functionality described may be implemented in any suitable manner to provide suitable apparatus. Specifically, the components may consist of a single discrete entity, or may alternatively be formed by adapting existing parts or components. As such the required adaptation may be implemented in the form of processor-implementable instructions stored on a storage medium, such as a floppy disk, hard disk, PROM, RAM or any combination of these or other storage media. Furthermore, the functionality may be implemented in the form of hardware, firmware, software, or any combination of these. Specifically, the resource allocator, the code allocator and the interference processor may be implemented in any suitable form and may be situated anywhere in the communication system. Furthermore the functionality may be provided in a central unit as in the preferred embodiment or may be distributed between different units of the communication system.

It will be understood that the invention tends to provide the following advantages singly or in any combination:
- simple resource allocation providing separate inter-cell and intra-cell resource allocation
- efficient resource allocation by permitting subscriber units with high inter-cell interference to share a resource, thereby providing optimised resource allocation for critical subscriber units, while allowing efficient and independent resource allocation for subscriber units not experiencing high inter-cell interference.
- allows for joint detection across a plurality of cells thereby significantly reducing the impact of inter-cell interference and thus increasing system capacity.

## Claims

1. A cellular communication system (200) having a plurality of cells (201-207), each cell having an associated cell separation spreading code for communicating with subscriber units of that cell and suppressing subscriber units of other cells; the communication system being **characterised by** comprising:
means for identifying that interference exists between a first group of subscriber units (211, 215, 219) served among different serving base stations (201, 203, 205) of a plurality of base stations (201-207);
means for allocating a common spreading code shared among the base stations (201, 203, 205) serving the first group of subscriber units (211, 215, 219) thereby creating a shared resource for the first group of subscriber units (211, 215, 219) among the plurality of base stations (201, 203, 205) serving the first group;
means for allocating resource of the shared resource between the subscriber units of the first group of subscriber units (211, 215, 219) and for allocating resource of the associated cell separation spreading code of each of the base stations of the plurality of base stations to subscriber units of their associated base station and not of the first group of subscriber units (211, 215, 219).

2. A cellular communication system as claimed in claim 1 wherein the shared resource is divided according to a code division multiple access scheme, and the means for allocating resource of the shared resource is operable to allocate different user specific codes to different subscriber units of the first group of subscriber units (211, 215, 219).

3. A cellular communication system as claimed in claim 2 wherein at least one of the subscriber units of the first group of subscriber units (211, 215, 219) is operable to perform joint detection of signals for a plurality of the subscriber units of the first group of subscriber units thereby reducing interference caused by transmissions to other subscriber units is reduced.

4. A cellular communication system as claimed in any of the previous claims 2 and 3 as wherein a time division multiple access scheme is employed by the cells of the communication system with each time slot being shared by a plurality of subscriber units having different user specific codes.

5. A cellular communication system as claimed in claim 1 wherein the shared resource is shared according to a time division multiple access scheme and the means for allocating resource of the shared resource is operable to allocate different time slots to different subscriber units of the first group of subscriber units.

6. A cellular communication system as claimed in claim 1 further comprising means for determining the identity of subscriber units belonging to the first group of subscriber units (211, 215, 219) by other subscriber units of the first group detecting characteristics of interfering subscriber units.

7. A cellular communication system as claimed in claim 1 further comprising means for determining the identity of subscriber units belonging to the first group of subscriber units (211, 215, 219) from the location of the subscriber units.

8. A method of allocating resource in a cellular communication system (200) having a plurality of cells (201-207), each cell having an associated cell separation spreading code for communicating with subscriber units of that cell and suppressing subscriber units of other cells; the method being **characterised by** comprising the steps of:
identifying that interference exists between a first group of subscriber units (211, 215, 219) served among different serving base stations (201, 203, 205) of a plurality of base stations;
allocating a common spreading code shared among the base stations serving the first group of subscriber units (211, 215, 219) thereby creating a shared resource for the first group of subscriber units (211, 215, 219) among the plurality of base stations (201, 203, 205) serving the first group;
allocating resource of the shared resource between the subscriber units of the first group of subscriber units (211, 215, 219) and allocating resource of the associated cell separation spreading code of each of the base stations of the plurality of base stations to subscriber units of their associated base station and not of the first group of subscriber units.

9. A method as claimed in claim 8 wherein the shared resource is divided according to a code division multiple access scheme, and the shared resource is allocated by allocating different user specific codes to different subscriber units of the first group of subscriber units.

10. A method as claimed in claim 9 further comprising the step of performing joint detection of signals for a plurality of the subscriber units of the first group of subscriber units in at least one of the subscriber units of the first group of subscriber units (211, 215, 219) thereby reducing interference caused by transmissions to other subscriber units.

11. A method as claimed in any of the previous claims 9 or 10 wherein a time division multiple access scheme is employed by the cells of the communication system with each time slot being shared by a plurality of subscriber units having different user specific codes.

12. A method as claimed in claim 8 wherein the shared resource is shared according to a time division multiple access scheme and the resource of the shared resource is allocated by allocating different time slots to different subscriber units of the first group of subscriber units (211, 215, 219).

## Patentansprüche

1. Zellulares Kommunikationssystem (200), das über eine Mehrzahl von Zellen (201-207) verfügt, wobei jede Zelle über einen verknüpften Zellentrennungsspreizcode zum Kommunizieren mit Teilnehmereinheiten dieser Zelle und Unterdrücken von Teilnehmereinheiten anderer Zellen verfügt; wobei das Kommunikationssystem **dadurch gekennzeichnet ist, dass** es umfasst:
Mittel zum Identifizieren, dass es eine Störung zwischen Teilnehmereinheiten (211, 215, 219) einer ersten Gruppe gibt, die durch verschiedene versorgende Basisstationen (201, 203, 205) einer Mehrzahl von Basisstationen (201-207) versorgt werden;
Mittel zum Zuordnen eines gemeinsamen Spreizcodes, der von den Basisstationen (201, 203, 205), die die erste Gruppe von Teilnehmereinheiten (211, 215, 219) versorgen, gemeinsam verwendet wird, wodurch eine gemeinsam verwendete Ressource für die erste Gruppe von Teilnehmereinheiten (211, 215, 219) der Mehrzahl von Basisstationen (201, 203, 205), die die erste Gruppe versorgen, erzeugt wird;
Mittel zum Zuordnen einer Ressource der gemeinsam verwendeten Ressource zu den Teilnehmereinheiten der ersten Gruppe von Teilnehmereinheiten (211, 215, 219) und zum Zuordnen einer Ressource des verknüpften Zellentrennungsspreizcodes einer jeden der Basisstationen der Mehrzahl von Basisstationen zu Teilnehmereinheiten ihrer verknüpften Basisstation und nicht der ersten Gruppe von Teilnehmereinheiten (211, 215, 219).

2. Zellulares Kommunikationssystem gemäß Anspruch 1, wobei die gemeinsam verwendete Ressource gemäß einem CDMA-Schema aufgeteilt wird und das Mittel zum Zuordnen einer Ressource der gemeinsam verwendeten Ressource betreibbar ist, um verschiedenen Teilnehmereinheiten der ersten Gruppe von Teilnehmereinheiten (211, 215, 219) verschiedene anwenderspezifische Codes zuzuordnen.

3. Zellulares Kommunikationssystem gemäß Anspruch 2, wobei mindestens eine Teilnehmereinheit der Teilnehmereinheiten der ersten Gruppe von Teilnehmereinheiten (211, 215, 219) betreibbar ist, um eine gemeinsame Erfassung von Signalen für eine Mehrzahl von Teilnehmereinheiten der ersten Gruppe von Teilnehmereinheiten durchzuführen, wodurch eine Störung verringert wird, die durch Übertragungen zu anderen Teilnehmereinheiten verursacht wird.

4. Zellulares Kommunikationssystem gemäß einem der vorangehenden Ansprüche 2 und 3, wobei durch die Zellen des Kommunikationssystems ein TDMA-Schema (TDMA = Mehrfachzugriff im Zeitmultiplex) eingesetzt wird, wobei jeder Zeitschlitz durch eine Mehrzahl von Teilnehmereinheiten, die über verschiedene anwenderspezifische Codes verfügen, gemeinsam verwendet wird.

5. Zellulares Kommunikationssystem gemäß Anspruch 1, wobei die gemeinsam verwendete Ressource gemäß einem TDMA-Schema (TDMA = Mehrfachzugriff im Zeitmultiplex) gemeinsam verwendet wird und das Mittel zum Zuordnen einer Ressource der gemeinsam verwendeten Ressource betreibbar ist, um verschiedenen Teilnehmereinheiten der ersten Gruppe von Teilnehmereinheiten verschiedene Zeitschlitze zuzuordnen.

6. Zellulares Kommunikationssystem gemäß Anspruch 1, das weiterhin umfasst: Mittel zum Bestimmen der Identität von Teilnehmereinheiten, die zu der ersten Gruppe von Teilnehmereinheiten (211, 215, 219) gehören, durch ein Erfassen von Charakteristiken von störenden Teilnehmereinheiten durch andere Teilnehmereinheiten der ersten Gruppe.

7. Zellulares Kommunikationssystem gemäß Anspruch 1, das weiterhin umfasst: Mittel zum Bestimmen der Identität von Teilnehmereinheiten, die zu der ersten Gruppe von Teilnehmereinheiten (211, 215, 219) gehören, von dem Standort der Teilnehmereinheiten.

8. Verfahren zum Zuordnen einer Ressource in einem zellularen Kommunikationssystem (200), das über eine Mehrzahl von Zellen (201-207) verfügt, wobei jede Zelle über einen verknüpften Zellentrennungsspreizcode zum Kommunizieren mit Teilnehmereinheiten dieser Zelle und Unterdrücken von Teilnehmereinheiten anderer Zellen verfügt; wobei das Verfahren **dadurch gekennzeichnet ist, dass** es umfasst:
Identifizieren, dass es eine Störung zwischen Teilnehmereinheiten (211, 215, 219) einer ersten Gruppe gibt, die durch verschiedene versorgende Basisstationen (201, 203, 205) einer Mehrzahl von Basisstationen versorgt werden;
Zuordnen eines gemeinsamen Spreizcodes, der von den Basisstationen, die die erste Gruppe von Teilnehmereinheiten (211, 215, 219) versorgen, gemeinsam verwendet wird, wodurch eine gemeinsam verwendete Ressource für die erste Gruppe von Teilnehmereinheiten (211, 215, 219) der Mehrzahl von Basisstationen (201, 203, 205), die die erste Gruppe versorgen, erzeugt wird;
Zuordnen einer Ressource der gemeinsam verwendeten Ressource zwischen den Teilnehmereinheiten der ersten Gruppe von Teilnehmereinheiten (211, 215, 219) und zum Zuordnen einer Ressource des verknüpften Zellentrennungsspreizcodes einen jeden der Basisstationen der Mehrzahl von Basisstationen zu Teilnehmereinheiten ihrer verknüpften Basisstation und nicht der ersten Gruppe von Teilnehmereinheiten.

9. Verfahren gemäß Anspruch 8, wobei die gemeinsam verwendete Ressource gemäß einem CDMA-Schema aufgeteilt wird und die gemeinsam verwendete Ressource durch ein Zuordnen verschiedener anwenderspezifischer Codes zu verschiedenen Teilnehmereinheiten der ersten Gruppe von Teilnehmereinheiten zugeordnet wird.

10. Verfahren gemäß Anspruch 9, das weiterhin den folgenden Schritt umfasst: Durchführen einer gemeinsamen Erfassung von Signalen für eine Mehrzahl von Teilnehmereinheiten der ersten Gruppe von Teilnehmereinheiten in mindestens einer der Teilnehmereinheiten der ersten Gruppe von Teilnehmereinheiten (211, 215, 219), wodurch eine Störung verringert wird, die durch Übertragungen zu anderen Teilnehmereinheiten verursacht wird.

11. Verfahren gemäß einem der vorangehenden Ansprüche 9 oder 10, wobei durch die Zellen des Kommunikationssystems ein TDMA-Schema (TDMA = Mehrfachzugriff im Zeitmultiplex) eingesetzt wird, wobei jeder Zeitschlitz durch eine Mehrzahl von Teilnehmereinheiten, die über verschiedene anwenderspezifische Codes verfügen, gemeinsam verwendet wird.

12. Verfahren gemäß Anspruch 8, wobei die gemeinsam verwendete Ressource gemäß einem TDMA-Schema (TDMA = Mehrfachzugriff im Zeitmultiplex) gemeinsam verwendet wird und die Ressource der gemeinsam verwendeten Ressource durch Zuordnen verschiedener Zeitschlitze zu verschiedenen Teilnehmereinheiten der ersten Gruppe von Teilnehmereinheiten (211, 215, 219) zugeordnet wird.

## Revendications

1. Système de communication cellulaire (200) ayant une pluralité de cellules (201 - 207), chaque cellule ayant un code d'étalement et de séparation de cellules associé pour communiquer avec des unités d'abonné de cette cellule et supprimer les unités d'abonné des autres cellules ; le système de communication étant **caractérisé en ce qu'**il comprend :
des moyens pour identifier qu'il existe des interférences entre les unités d'abonné d'un premier groupe d'unités d'abonné (211, 215, 219) desservies par des stations de base de desserte différentes (201, 203, 205) d'une pluralité de stations de base (201 - 207) ;
des moyens pour allouer un code d'étalement commun partagé par les stations de base (201, 203, 205) qui desservent le premier groupe d'unités d'abonné (211, 215, 219), en créant ainsi pour le premier groupe d'unités d'abonné (211, 215, 219) une ressource qui est partagée par la pluralité de stations de base (201, 203, 205) qui dessert le premier groupe ;
des moyens pour allouer la ressource partagée parmi les unités d'abonné du premier groupe d'unités d'abonné (211, 215, 219) et pour allouer le code d'étalement et de séparation de cellules associé de chacune des stations de base de la pluralité de stations de base aux unités d'abonnées associées aux stations de base respectives et pas au premier groupe d'unités d'abonné (211, 215, 219).

2. Système de communication cellulaire selon la revendication 1, dans lequel la ressource partagée est divisée selon un mécanisme d'accès multiple à répartition par codes, et les moyens d'allocation de la ressource partagée fonctionnent de façon à allouer des codes spécifiques d'utilisateur différents à différentes unités d'abonné du premier groupe d'unités d'abonné (211, 215, 219).

3. Système de communication cellulaire selon la revendication 2, dans lequel au moins l'une des unités d'abonné du premier groupe d'unités d'abonné (211, 215, 219) fonctionne de façon à effectuer une détection conjointe de signaux pour une pluralité des unités d'abonné du premier groupe d'unités d'abonné, ce qui réduit les interférences provoquées par les transmissions à d'autres unités d'abonné.

4. Système de communication cellulaire selon l'une quelconque des revendications 2 et 3 précédentes, dans lequel un mécanisme d'accès multiple à répartition dans le temps est utilisé par les cellules du système de communication, chaque tranche de temps étant partagée par une pluralité d'unités d'abonné ayant des codes spécifiques d'utilisateur différents.

5. Système de communication cellulaire selon la revendication 1, dans lequel la ressource partagée est partagée selon un mécanisme d'accès multiple à répartition dans le temps, et les moyens d'allocation de la ressource partagée fonctionnent de façon à allouer des tranches de temps différentes à différentes unités d'abonné du premier groupe d'unités d'abonné.

6. Système de communication cellulaire selon la revendication 1, comprenant en outre des moyens permettant la détermination de l'identité d'unités d'abonné appartenant au premier groupe d'unités d'abonné (211, 215, 219) par d'autres unités d'abonné du premier groupe détectant des caractéristiques d'unités d'abonné créant des interférences.

7. Système de communication cellulaire selon la revendication 1, comprenant en outre des moyens permettant la détermination de l'identité d'unités d'abonné appartenant au premier groupe d'unités d'abonné (211, 215, 219) depuis l'emplacement des unités d'abonné.

8. Procédé d'allocation de ressource dans un système de communication cellulaire (200) ayant une pluralité de cellules (201 - 207), chaque cellule ayant un code d'étalement et de séparation de cellules associé pour communiquer avec des unités d'abonné de cette cellule et supprimer les unités d'abonné des autres cellules ; le procédé étant **caractérisé en ce qu'**il comprend les étapes consistant à :
identifier qu'il existe des interférences entre les unités d'abonné d'un premier groupe d'unités d'abonné (211, 215, 219) desservies par des stations de base de desserte différentes (201, 203, 205) d'une pluralité de stations de base ;
allouer un code d'étalement commun partagé par les stations de base qui desservent le premier groupe d'unités d'abonné (211, 215, 219), en créant ainsi pour le premier groupe d'unités d'abonné (211, 215, 219) une ressource qui est partagée par la pluralité de stations de base (201, 203, 205) qui dessert le premier groupe ;
allouer la ressource partagée parmi les unités d'abonné du premier groupe d'unités d'abonné (211, 215, 219) et allouer le code d'étalement et de séparation de cellules associé de chacune des stations de base de la pluralité de stations de base aux unités d'abonnées associées aux stations de base respectives et pas au premier groupe d'unités d'abonné.

9. Procédé selon la revendication 8, dans lequel la ressource partagée est divisée selon un mécanisme d'accès multiple à répartition par codes, et la ressource partagée est allouée par allocation de codes spécifiques d'utilisateur différents à différentes unités d'abonné du premier groupe d'unités d'abonné.

10. Procédé selon la revendication 9, comprenant en outre l'étape consistant à effectuer une détection conjointe de signaux pour une pluralité des unités d'abonné du premier groupe d'unités d'abonné, dans au moins l'une des unités d'abonné du premier groupe d'unités d'abonné (211, 215, 219), ce qui réduit les interférences provoquées par les transmissions à d'autres unités d'abonné.

11. Procédé selon l'une quelconque des revendications 9 ou 10 précédentes, dans lequel un mécanisme d'accès multiple à répartition dans le temps est utilisé par les cellules du système de communication, chaque tranche de temps étant partagée par une pluralité d'unités d'abonné ayant des codes spécifiques d'utilisateur différents.

12. Procédé selon la revendication 8, dans lequel la ressource partagée est partagée selon un mécanisme d'accès multiple à répartition dans le temps, et la ressource partagée est allouée par allocation de tranches de temps différentes à différentes unités d'abonné du premier groupe d'unités d'abonné. (211, 215, 219).
